# EUROPEAN PATENT APPLICATION

(11) **EP 3 272 410 A1**
(43) Date of publication of application: **24.01.2018**
(21) Application number: 16768418.2
(22) Date of filing: 09.03.2016
(51) Int. Cl.: B01D 53/26, B01D 53/22, B01D 69/08

(54) **DEHUMIDIFICATION DEVICE**

(30) Priority: 20.03.2015 JP 2015057664
(71) Applicant: Nabtesco Automotive Corporation, Tokyo 102-0093 (JP)
(72) Inventor: MIZUFUNE, Toru, Kobe-shi Hyogo 651-2271 (JP); KUROMITSU, Masaru, Kobe-shi Hyogo 651-2271 (JP); TAKAHASHI, Akira, Kobe-shi Hyogo 651-2271 (JP); MIYAUCHI, Tatsuo, Kobe-shi Hyogo 651-2271 (JP)
(74) Representative: Grünecker Patent- und Rechtsanwälte PartG mbB
(86) International application number: PCT/JP2016/057292
(87) International publication number: WO 2016/152515

(57) **Abstract**

A dehumidification device (1) includes a hollow fiber membrane-type dehumidification unit (10) having a hollow fiber membrane in which air from an upstream side passes through to dehumidify the air by the hollow fiber membrane and discharge the air to a downstream side; and an adsorption-type dehumidification unit (6) having an adsorbent (8a) to dehumidify the air, the adsorbent (8a) being supplied with the air discharged from the hollow fiber membrane-type dehumidification unit (10) to absorb moisture contained in the air. The dehumidification device (1) further includes a drain separator (2) which separates drains of compressed air discharged from an air compressor arranged on the upstream side. The hollow fiber membrane-type dehumidification unit (10) is supplied with compressed air with drains separated by the drain separator (2).

## Description

### Technical Field

The present invention relates to a dehumidification device for dehumidifying compressed air for use in a vehicle (for example, railway vehicle).

### Background Art

For example, Patent Literature 1 discloses a compression device for generating compressed air for use in generating braking force in a railway vehicle. In this compression device, air compressed by an air compression unit is cooled by an after-cooler and dehumidified by a dehumidification device. This air is then stored in a compressed air tank.

Additionally, as the above-described dehumidification device for dehumidifying compressed air, for example, an adsorption-type dehumidification device is known which uses an adsorbent capable of absorbing moisture in the air, or a hollow fiber membrane-type dehumidification device.

An adsorption-type dehumidification device is easily adaptable to a device from which high dehumidification performance is demanded (adaptable to ISO 8573 Class 2). However, this dehumidification device requires reproduction of a drying agent. By contrast, a hollow fiber membrane-type device requires no reproduction of a drying agent and therefore can be continuously used. However, a size of a device needs to be increased for improving dehumidification performance. Additionally, dehumidification of compressed air can be continuously conducted using two adsorption-type dehumidification devices. In this case, for example, where two adsorption-type dehumidification devices are connected in parallel, at the time of dehumidification at one device, a part of dry air is caused to flow to the other device (called purge). In other words, an adsorbent of the other device is dried so as to be again usable as an adsorbent. Then, at the time of dehumidification at the other device, the one is purged to dry an adsorbent so as to be again usable as an adsorbent. Therefore, a switching valve for switching two adsorption-type dehumidification devices, and an electromagnetic valve and a control circuit for driving the switching valve are required. Accordingly, a system therefor is complicated to increase cost thereof.

### Citation List

### Patent Literature

Patent Literature 1: Japanese Utility Model Registration No. 3150077

### Summary of Invention

An object of the present invention is to enable a dehumidification device to be downsized while allowing the dehumidification device to maintain high dehumidification performance.

A dehumidification device according to one aspect of the present invention, which is a dehumidification device for dehumidifying air for use in a vehicle, includes a hollow fiber membrane-type dehumidification unit having a hollow fiber membrane in which air from an upstream side passes through to dehumidify the air by the hollow fiber membrane and discharge the air to a downstream side; and an adsorption-type dehumidification unit having an adsorbent to dehumidify the air, the adsorbent being supplied with the air discharged from the hollow fiber membrane-type dehumidification unit to absorb moisture contained in the air.

### Brief Description of Drawings

FIG. 1 is a perspective view showing a configuration of a dehumidification device according to an embodiment of the present invention.
FIG. 2 is a plan view of the dehumidification device shown in FIG. 1.
FIG. 3 is a right side view of the dehumidification device shown in FIG. 1, in which an internal structure of a part of components is shown.

### Description of Embodiments

In the following, an embodiment of the present invention will be described with reference to the drawings. A dehumidification device 1 according to the embodiment of the present invention is applicable as a dehumidification device for dehumidifying compressed air for use in a railway vehicle. However, the dehumidification device 1 is not limited to a dehumidification device for use in a railway vehicle, and may be used in other vehicle in addition to a railway vehicle.

### [Overall Configuration]

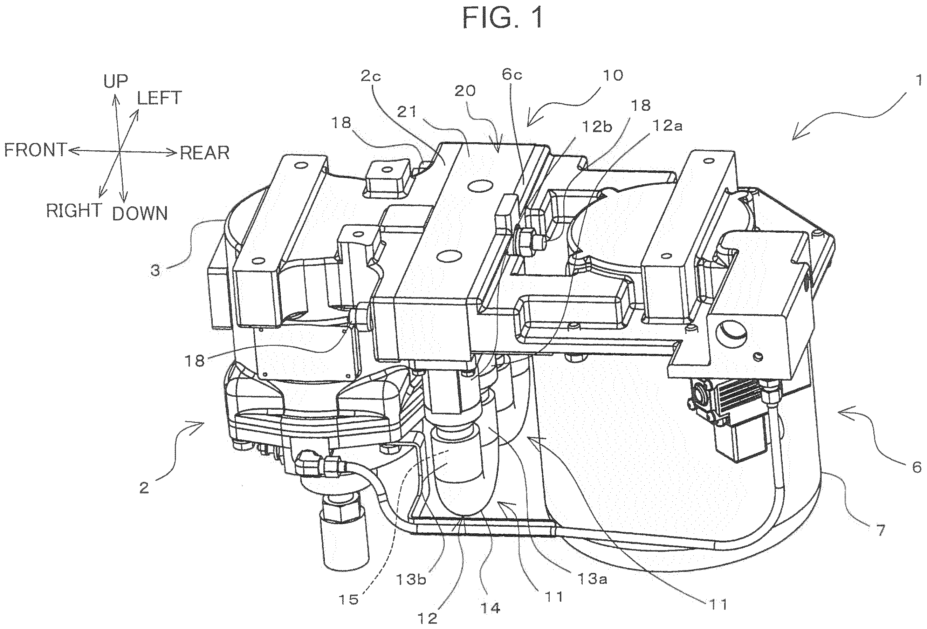

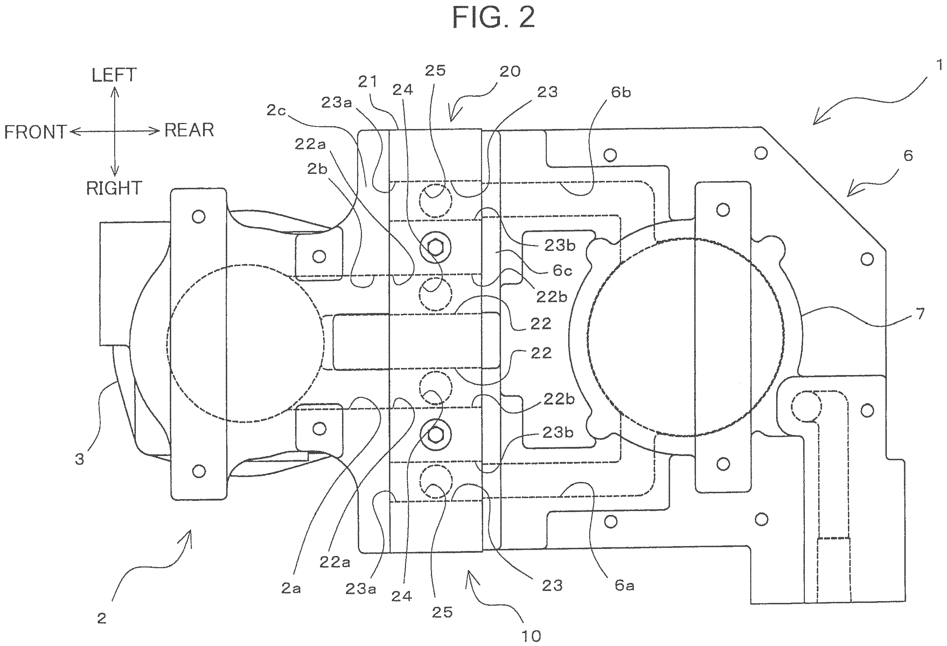

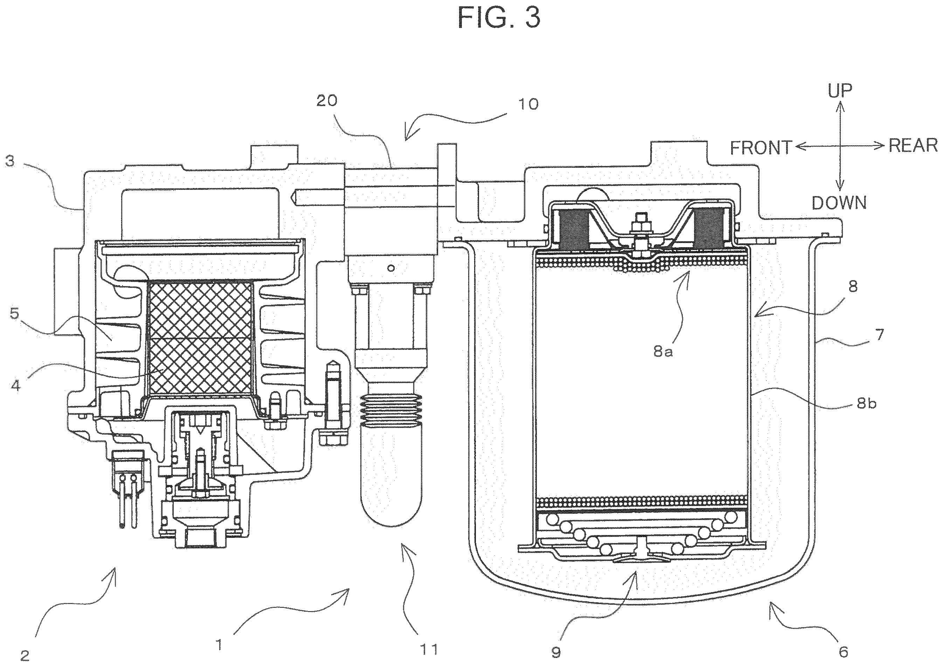

FIG. 1 is a perspective view showing a configuration of the dehumidification device 1 according to the embodiment of the present invention. FIG. 2 is a plan view of the dehumidification device 1. FIG. 3 is a right side view of the dehumidification device 1, in which an internal structure of a part of components is shown. In each drawing, for explanation's sake, a direction indicated by an arrow denoted as "front" will be referred to as a front side or forward, a direction indicated by an arrow denoted as "rear" will be referred to as a rear side or rearward, a direction indicated by an arrow denoted as "right" will be referred to as a right side, a direction indicated by an arrow denoted as "left" will be referred to as a left side, a direction indicated by an arrow denoted as "up" will be referred to as an upper side or upward, and a direction indicated by an arrow denoted as "down" will be referred to as a lower side or downward.

The dehumidification device 1 according to the present embodiment is mounted on a railway vehicle (not shown) and used for dehumidifying compressed air for use in generating braking force in the railway vehicle. Air (compressed air) generated by an air compressor (illustration omitted) flows into the dehumidification device 1. Then, the compressed air dehumidified by the dehumidification device 1 is stored in a compressed air tank (illustration omitted) arranged downstream of the dehumidification device 1. The compressed air thus stored in the compressed air tank is used as required.

The dehumidification device 1, as shown in FIGS. 1 to 3, has a drain separator 2 (a drain separation unit), a hollow fiber membrane-type dehumidification unit 10 and an adsorption-type dehumidification unit 6 which are connected to each other.

### [Drain Separator]

The drain separator 2 serves for removing drains (for example, oil and moisture) contained in compressed air generated by an air compressor. As shown in FIG. 3, the drain separator 2 has a housing 3 (a drain separation unit housing) and a drain separation main body unit 4 provided in the housing 3. In the drain separator 2, after flowing from upward to downward along a spiral flow path 5 formed spirally, compressed air flowing into the drain separator 2 flows from downward to upward in the drain separation main body unit 4. On this occasion, drains contained in the compressed air attach to the drain separation main body unit 4 when passing through the drain separation main body unit 4 so as to be removed from the compressed air. The drain separation main body unit 4 is configured, as one example, of an aluminum crusher formed of aluminum fiber or the like tangled with each other to be a lump. This enables moisture contained in the compressed air to be roughly removed in the drain separator 2. The compressed air from which drains are separated by the drain separator 2 flows out from the drain separation main body unit 4 toward the hollow fiber membrane-type dehumidification unit 10 through any of two drain separator side outlets 2a and 2b (see FIG. 2).

### [Hollow Fiber Membrane-Type Dehumidification Unit]

The hollow fiber membrane-type dehumidification unit 10 is formed by combining a plurality of dehumidification main body units 11 with each other. The compressed air with drains removed by the above-described drain separator 2 passes through the hollow fiber membrane-type dehumidification unit 10 so as to be dehumidified.

As shown in FIGS. 1 to 3, the hollow fiber membrane-type dehumidification unit 10 has the two dehumidification main body units 11 and a base portion 20.

The dehumidification main body units 11 are each hollow fiber membrane-type dehumidification units having the same shape. Specifically, as shown in FIG. 1, the dehumidification main body unit 11 has a housing 12 (a hollow fiber membrane-type dehumidification unit housing) and a plurality of hollow fiber membranes 15 provided in the housing 12.

The housing 12, which is a tubular formed part, has two linear portions 13a and 13b and a curved portion 14, which are integrally formed. The hollow fiber membranes 15 are arranged over one linear portion 13a, the curved portion 14, and the other linear portion 13b. The two linear portions 13a and 13b, which are tubular parts linearly extending, are provided so as to be spaced apart from and parallel to each other. The curved portion 14 is a U-shaped tubular part with one end portion integrally provided with one end portion of the linear portion 13a and with the other end portion integrally provided with one end portion of the linear portion 13b. One end side of the housing 12 is provided as a dehumidification unit inlet 12a into which compressed air from the upstream side flows, and the other end side of the housing 12 is provided as a dehumidification unit outlet 12b from which compressed air dehumidified by the hollow fiber membrane-type dehumidification unit 10 flows to the downstream side. As compared with the housing 12 having a linear shape, thus forming the housing 12 to have a U-shape enables one end side of the hollow fiber membranes 15 to be provided at a dehumidification unit upstream side path 24 and the other end side to be provided at a dehumidification unit downstream side path 25 without providing another pipe as will be described later. Further, being U-shaped is less likely to hinder an air flow as compared with being bent.

The hollow fiber membranes 15 is configured with a membrane portion in an elongated hollow tubular shape, having opening portions at both end portions and having a compressed air flow path internally formed. In the hollow fiber membranes 15, the vapor being contained in compressed air passing in the hollow fiber membranes 15 penetrates to the outside of the membrane portion, thereby generating dehumidified compressed air.

The plurality of hollow fiber membranes 15 are housed in the housing 12 so as to be in parallel to each other. Specifically, each of the hollow fiber membranes 15 is provided, with the opening portion at one end side opened outwardly at the dehumidification unit inlet 12a, so as to extend along a direction in which the housing 12 extends, and with the opening portion at the other end side opened outwardly at the dehumidification unit outlet 12b. With this arrangement, in the hollow fiber membrane-type dehumidification unit 10, compressed air flowing in from the dehumidification unit inlet 12a is dehumidified by the plurality of hollow fiber membranes 15 to then flow out to the downstream side via the dehumidification unit outlet 12b.

As shown in FIG. 1 and 2, the base portion 20 is configured with a block portion 21 formed in a rectangular parallelepiped shape long in a left-right direction.

As shown in FIG. 2, the block portion 21 has four through holes 22 and 23 formed to pass through the block portion 21 in a front-rear direction. Each of the through holes 22 and 23 is formed to linearly extend in the front-rear direction so as to be spaced in the left-right direction. Of these four through holes 22 and 23, the two through holes 22 formed in a central part in the left-right direction are provided as input side air paths 22, respectively. Then, the remaining two through holes 23 (the through hole 23 formed at the rightmost side and the through hole 23 formed at the leftmost side) are provided as output side air paths 23, respectively.

With reference to FIG. 2, an end portion 22a at the front side in each input side air path 22 is provided as an inlet 22a into which compressed air from the drain separator 2 side flows. On the other hand, an end portion 23b at the rear side in each output side air path 23 is provided as an outlet 23b from which compressed air flows out to the adsorption-type dehumidification unit 6 side.

Each block portion 21 has holes 24 and 25 formed to extend downwardly from central parts in the front-rear direction of the two input side air paths 22 and the two output side air paths 23, respectively, to communicate with the outside. Of these four holes 24 and 25, the two holes 24 communicating with the respective input side air paths 22 and the outside are provided as the dehumidification unit upstream side paths 24. Then, the remaining two holes 25 (the two holes 25 communicating with the respective output side air paths 23 and the outside) are provided as the dehumidification unit downstream side paths 25.

The hollow fiber membrane-type dehumidification unit 10 is configured by combining thus configured two dehumidification main body units 11 and one base portion 20 in a manner as described in the following. Specifically, in the hollow fiber membrane-type dehumidification unit 10, the two dehumidification main body units 11 are fixed to one base portion 20. More specifically, the dehumidification main body units 11 are fixed to the base portion 20 by a bolt or the like such that the respective end portions 12a and 12b of the dehumidification main body units 11 communicate with any of the dehumidification unit upstream side path 24 and the dehumidification unit downstream side path 25. With this arrangement, of the both end portions 12a and 12b of the dehumidification main body units 11, the end portion which communicates with the dehumidification unit upstream side path (hole) 24 functions as the dehumidification unit inlet 12a and the end portion which communicates with the dehumidification unit downstream side path (hole) 25 functions as the dehumidification unit outlet 12b.

### [Adsorption-Type Dehumidification Unit]

The adsorption-type dehumidification unit 6 serves for further dehumidifying compressed air dehumidified by the hollow fiber membrane-type dehumidification unit 10. The adsorption-type dehumidification unit 6 is provided downstream of the hollow fiber membrane-type dehumidification unit 10 to dehumidify compressed air from the hollow fiber membrane-type dehumidification unit 10 by an adsorbent capable of absorbing moisture.

The adsorption-type dehumidification unit 6 has a casing 7 (an adsorption-type dehumidification unit housing) and an adsorption-type dehumidification main body unit 8 provided in the casing 7. Inside the casing 7, there are provided adsorption-type dehumidification unit side flow paths 6a and 6b for guiding compressed air dehumidified by the hollow fiber membrane-type dehumidification unit 10 to the adsorption-type dehumidification main body unit 8 (see FIG. 2). The adsorption-type dehumidification main body unit 8 has an adsorbent 8a (for example, silica gel) and an adsorbent housing portion 8b which houses the adsorbent 8a.

In the adsorption-type dehumidification unit 6, compressed air flowing into from the hollow fiber membrane-type dehumidification unit 10 side flows in the adsorption-type dehumidification main body unit 8 via the adsorption-type dehumidification unit side flow paths 6a and 6b. On this occasion, moisture contained in the compressed air is dehumidified by absorption by the adsorbent 8a to then flow further downstream via a check valve 9. The check valve 9 serves for allowing compressed air which is dehumidified by the adsorption-type dehumidification unit 6 to flow to the downstream side of the adsorption-type dehumidification unit 6, as well as regulating compressed air from the downstream side from flowing into the adsorption-type dehumidification unit 6.

Moisture absorbed by the adsorbent 8a of the adsorption-type dehumidification unit 6 is discharged from the adsorbent 8a as a result of sending of dry air into the adsorbent 8a (that is, purging). In the dehumidification device 1, the adsorbent 8a is reproduced by appropriately performing the purging.

In the dehumidification device 1, thus configured drain separator 2, hollow fiber membrane-type dehumidification unit 10 and adsorption-type dehumidification unit 6 are fixed to each other in the following manner. Specifically, the housing 3 of the drain separator 2, the base portion 20 of the hollow fiber membrane-type dehumidification unit 10 and the casing 7 of the adsorption-type dehumidification unit 6 are aligned in close contact with each other in the front-rear direction. In other words, a flat rear side surface (a rear side surface of a wall portion 2c) of the housing 3 and a flat front side surface of the base portion 20 are faced to each other, and the rear side surface of the housing 3 and the front side surface of the base portion 20 are in surface contact with each other. In this state, the housing 3 and the base portion 20 are joined to each other by a fastening screw (fastener) 18 inserted from a front side surface of the wall portion 2c into an insertion hole of the wall portion 2c. Additionally, a flat rear side surface of the base portion 20 and a flat front side surface of the casing 7 (a front side surface of a wall portion 6c) are faced to each other, and the rear side surface of the base portion 20 and the front side surface of the casing 7 are in surface contact with each other. In this state, the base portion 20 and the casing 7 are joined to each other by the fastening screw 18 (fastener) inserted from a rear side surface of the wall portion 6c into an insertion hole of the wall portion 6c. In other words, the base portion 20 is sandwiched by the housing 3 and the casing 7. Thus, the housing 3, the base portion 20 and the casing 7 are coupled to each other by a plurality of the fastening screws 18 (see FIG. 1). A length of the base portion 20 in the left-right direction, a length of the wall portion 2c of the housing 3 in the left-right direction, and a length of the wall portion 6c of the casing 7 in a length direction are the same.

The drain separator 2, the hollow fiber membrane-type dehumidification unit 10 and the adsorption-type dehumidification unit 6 are joined with each other to be modularized. Then, a flow path of compressed air is formed inside the dehumidification device 1. Additionally, in this state, in the dehumidification device 1, the inlet 22a and 22a of each of the input side air paths 22 communicate with any of the drain separator side outlets 2a and 2b, and the outlet 23b and 23b of each of the output side air paths 23 communicate with any of the adsorption-type dehumidification unit side flow paths 6a and 6b. In this state, an end portion 22b at the rear side of the input side air path 22 is blocked by the wall portion 6c formed on the casing 7 of the adsorption-type dehumidification unit 6 as shown in FIG. 2. Therefore, the input side air path 22 can be formed by the through hole 22 passing through the base portion 20 (the block portion 21) in the front-rear direction. This prevents processing of the base portion 20 from being complicated. Additionally, an end portion 23a at the front side of the output side air path 23 is blocked by the wall portion 2c formed on the housing 3 of the drain separator 2. Therefore, the output side air path 23 can be formed by the through hole 23 passing through the base portion 20 (the block portion 21) in the front-rear direction. This prevents processing of the base portion 20 from being complicated.

### [Flow of Compressed Air in Dehumidification Device]

In the dehumidification device 1, compressed air generated by an air compressor is dehumidified in the following manner.

First, with reference to FIGS. 2 and 3, after flowing into the drain separator 2 and passing through the spiral flow path 5, compressed air generated by the air compressor passes through the drain separation main body unit 4. As a result, drains contained in the compressed air are removed. The compressed air with the drains thus removed flows into the hollow fiber membrane-type dehumidification unit 10 through any of the drain separator side outlets 2a and 2b.

The compressed air from the drain separator side outlet 2a sequentially flows through the input side air path 22 at the right side of the two input side air paths 22 formed in the base portion 20, the dehumidification main body unit 11 at the right side and the output side air path 23 at the right side. The compressed air is dehumidified by the hollow fiber membrane 15 when passing through the inside of the dehumidification main body unit 11. Thereafter, the compressed air flows into the adsorption-type dehumidification unit 6 through the adsorption-type dehumidification unit side flow path 6a. On the other hand, the compressed air from the drain separator side outlet 2b sequentially flows through the input side air path 22 at the left side of the two input side air paths 22 formed in the base portion 20, the dehumidification main body unit 11 at the left side and the output side air path 23 at the left side. The compressed air is dehumidified by the hollow fiber membranes 15 when passing through the inside of the dehumidification main body units 11. Thereafter, the compressed air flows into the adsorption-type dehumidification unit 6 through the adsorption-type dehumidification unit side flow path 6b.

The compressed air having flown through the adsorption-type dehumidification unit side flow path 6a and the compressed air having flown through the adsorption-type dehumidification unit side flow path 6b join together inside the adsorption-type dehumidification main body unit 8. After being dehumidified by the adsorbent 8a when flowing inside the adsorption-type dehumidification main body unit 8, the compressed air flows further downstream via the check valve 9 and is stored in the compressed air tank.

### [Effect]

As described in the foregoing, in the dehumidification device 1 according to the present embodiment, moisture contained in the compressed air which is dehumidified by the hollow fiber membrane-type dehumidification unit 10 is absorbed by the adsorbent 8a of the adsorption-type dehumidification unit 6. Specifically, since this configuration enables compressed air to be dehumidified by both the hollow fiber membrane-type dehumidification unit 10 and the adsorption-type dehumidification unit 6, compressed air can be satisfactorily dehumidified. In particular, since the compressed air dehumidified first by the hollow fiber membrane-type dehumidification unit 10 is dehumidified by the adsorption-type dehumidification unit 6, an amount of moisture to be dehumidified by the adsorption-type dehumidification unit 6 can be minimized. Therefore, a less amount of the adsorbent 8a of the adsorption-type dehumidification unit 6 is required, so that the adsorption-type dehumidification unit 6 can be configured to be compact. Accordingly, the dehumidification device 1 can be downsized. Using an amount of the adsorbent 8a necessary for dehumidification only for a predetermined continuous time period eliminates a need of provision of the two adsorption-type dehumidification units 6 and further provision of a switching valve for switching the adsorption-type dehumidification units 6, and an electromagnetic valve and a control circuit for driving the switching valve. A system which configures the dehumidification device can be accordingly simplified to enable downsizing of the dehumidification device 1 as a whole.

In this configuration, compressed air to be dehumidified by the adsorption-type dehumidification unit 6 is already dehumidified by the hollow fiber membrane-type dehumidification unit 10 arranged upstream of the adsorption-type dehumidification unit 6. It is therefore possible to mitigate a dehumidification load on the adsorption-type dehumidification unit 6. As a result, the number of executions of purging is reduced even when the adsorption-type dehumidification unit 6 is downsized. It is therefore possible to reduce an amount of dry air to be used which is required for reproducing the adsorbent 8a.

Accordingly, the dehumidification device 1 can be downsized while maintaining high dehumidification performance.

Additionally, since in the dehumidification device 1, the hollow fiber membrane-type dehumidification unit 10 has the curved portion 14, it is possible to prevent the hollow fiber membrane-type dehumidification unit 10 from becoming longer in one direction and also possible to make a length of the hollow fiber membranes 15 included in the hollow fiber membrane-type dehumidification unit 10 large. In other words, this configuration enables the hollow fiber membrane-type dehumidification unit 10 to be downsized while ensuring dehumidification performance of the hollow fiber membrane-type dehumidification unit 10.

Additionally, since the housing 12 (the curved portion 14) is formed U-shaped in the dehumidification device 1, as compared with a case, for example, where a curved portion has a slight curvature, the hollow fiber membrane-type dehumidification unit 10 can be further downsized.

Additionally, in the dehumidification device 1, compressed air is sent to the hollow fiber membrane-type dehumidification unit 10 and the adsorption-type dehumidification unit 6 after having the drains of the compressed air separated by the drain separator 2. This mitigates a dehumidification load on the hollow fiber membrane-type dehumidification unit 10 and the adsorption-type dehumidification unit 6.

Additionally, the drain separator 2, the hollow fiber membrane-type dehumidification unit 10 and the adsorption-type dehumidification unit 6 are modularized in the dehumidification device 1. It is therefore possible to easily integrate the drain separator 2, the hollow fiber membrane-type dehumidification unit 10 and the adsorption-type dehumidification unit 6 with each other or to easily attach to each other.

The embodiment of the present invention has been described in the foregoing. However, the present invention is not limited to the above-described embodiment, and may be implemented in various modifications within the scope of the claims. For example, the following modifications may be implemented.

(1) While in the above embodiment, the drain separator 2, the hollow fiber membrane-type dehumidification unit 10 and the adsorption-type dehumidification unit 6 are fixed to each other to be modularized, the embodiment is not limited thereto, and may not necessarily be modularized. Specifically, as one example, the drain separator, the hollow fiber membrane-type dehumidification unit and the adsorption-type dehumidification unit arranged in positions away from each other may be connected by a pipe (not shown) to form a flow path of compressed air.

Additionally, while the above embodiment has the configuration in which the housing 3 of the drain separator 2, the housing 12 of the hollow fiber membrane-type dehumidification unit 10 and the casing 7 of the adsorption-type dehumidification unit 6 are joined to each other, the configuration is not limited thereto. For example, the housing 3 of the drain separator 2, the housing 12 of the hollow fiber membrane-type dehumidification unit 10 and the casing 7 of the adsorption-type dehumidification unit 6 may be integrally formed.

(2) While in the above embodiment, the drain separator 2 is provided upstream of the hollow fiber membrane-type dehumidification unit 10, the embodiment is not limited thereto, and may have a configuration in which the drain separator 2 is omitted. In this case, the output side air path 23 may have the end portion 23a at the front side blocked, or other member, not shown in the drawings, which blocks the end portion 23a may be provided.

(3) While in the above embodiment, the curved portion 14 of the dehumidification main body unit 11 in the hollow fiber membrane-type dehumidification unit 10 is formed U-shaped, the embodiment is not limited thereto, and the shape may be other shape. Specifically, the curved portion 14 may have a slight curvature. Further, the dehumidification main body units 11 may have a shape without the curved portion 14, and may be linearly shaped, for example.

(4)While the above embodiment has been described with respect, as an example, to the hollow fiber membrane-type dehumidification unit 10 having the plurality of (specifically, two) dehumidification main body units 11, the embodiment is not limited thereto, and the hollow fiber membrane-type dehumidification unit may have one dehumidification main body unit 11.

### Here, the above embodiment will be outlined.

(1) In the above embodiment, a considerable part of dehumidification is conducted by a hollow fiber membrane-type dehumidification unit, and in an adsorption-type dehumidification unit, only the moisture not yet dehumidified by the hollow fiber membrane-type dehumidification unit needs to be dehumidified. In other words, the adsorption-type dehumidification unit is supplied with air dried to some extent. Therefore, only a small amount of an adsorbent is necessary, resulting in downsizing the adsorption-type dehumidification unit. Accordingly, the dehumidification device can be downsized as a whole. Additionally, using an amount of the adsorbent necessary for dehumidification only for a predetermined continuous time period eliminates a need of provision of the two adsorption-type dehumidification units and further provision of a switching valve for switching the adsorption-type dehumidification units, and an electromagnetic valve and a control circuit for driving the switching valve. A system which configures the dehumidification device can be accordingly simplified to enable downsizing of the dehumidification device as a whole.
   Additionally, in the above embodiment, compressed air to be dehumidified by the adsorption-type dehumidification unit is dehumidified by the hollow fiber membrane-type dehumidification unit arranged upstream of the adsorption-type dehumidification unit. It is therefore possible to mitigate a dehumidification load on the adsorption-type dehumidification unit. As a result, the number of executions of purging is reduced even when the adsorption-type dehumidification unit is downsized, so that it is possible to reduce an amount of air to be used which is required for reproducing the adsorbent.
   Accordingly, in the above embodiment, the dehumidification device can be downsized while maintaining high dehumidification performance.
(2) Preferably, the hollow fiber membrane-type dehumidification unit has a curved portion.
   This configuration enables a hollow fiber membrane included in the hollow fiber membrane-type dehumidification unit to have a large length while preventing the hollow fiber membrane-type dehumidification unit from becoming longer in one direction. In other words, this configuration enables the hollow fiber membrane-type dehumidification unit to be downsized while ensuring dehumidification performance of the hollow fiber membrane-type dehumidification unit.
(3) More preferably, the curved portion is formed U-shaped.
   As compared with a case where the curved portion has a slight curvature, this configuration enables downsizing of the hollow fiber membrane-type dehumidification unit.
(4) Preferably, the dehumidification device further includes a drain separation unit which separates drains of compressed air discharged from the air compressor arranged on the upstream side. Preferably, the hollow fiber membrane-type dehumidification unit is supplied with the compressed air with the drains separated by the drain separation unit.
   With this configuration, the compressed air, after having drains of the compressed air separated by the drain separation unit, is sent to the hollow fiber membrane-type dehumidification unit and the adsorption-type dehumidification unit. This mitigates a dehumidification load on the hollow fiber membrane-type dehumidification unit and the adsorption-type dehumidification unit.
(5) More preferably, the drain separation unit has a drain separation main body unit and a drain separation unit housing which externally covers the drain separation main body unit. Preferably, the hollow fiber membrane-type dehumidification unit has a hollow fiber membrane-type dehumidification unit housing which externally covers the hollow fiber membrane. Preferably, the adsorption-type dehumidification unit has an adsorbent housing portion in which the adsorbent is housed and an adsorption-type dehumidification unit housing which externally covers the adsorbent housing portion. Preferably, the drain separation unit housing, the hollow fiber membrane-type dehumidification unit housing and the adsorption-type dehumidification unit housing are provided integrally or joined to each other so as to form a flow path of compressed air flowing through the drain separation unit, the hollow fiber membrane-type dehumidification unit and the adsorption-type dehumidification unit.

In this configuration, the drain separation unit, the hollow fiber membrane-type dehumidification unit and the adsorption-type dehumidification unit can be modularized, so that it is possible to easily integrate the drain separation unit, the hollow fiber membrane-type dehumidification unit and the adsorption-type dehumidification unit with each other or to easily attach to each other.

The above embodiment enables a dehumidification device to be configured to be compact while allowing the device to maintain high dehumidification performance.

### Industrial Applicability

The present invention is useful as a dehumidification device for dehumidifying air (for example, compressed air) for use in a vehicle (for example, railway vehicle).

## Claims

1. A dehumidification device for dehumidifying air for use in a vehicle, the device comprising:
a hollow fiber membrane-type dehumidification unit having a hollow fiber membrane in which air from an upstream side passes through to dehumidify the air by the hollow fiber membrane and discharge the air to a downstream side; and
an adsorption-type dehumidification unit having an adsorbent to dehumidify the air, the adsorbent being supplied with the air discharged from the hollow fiber membrane-type dehumidification unit to absorb moisture contained in the air.

2. The dehumidification device according to claim 1, wherein the hollow fiber membrane-type dehumidification unit has a curved portion.

3. The dehumidification device according to claim 2, wherein the curved portion is formed U-shaped.

4. The dehumidification device according to any one of claims 1 to 3, further comprising a drain separation unit which separates drains of compressed air discharged from an air compressor arranged on the upstream side, wherein
the hollow fiber membrane-type dehumidification unit is supplied with compressed air with the drains separated by the drain separation unit.

5. The dehumidification device according to claim 4, wherein
the drain separation unit has a drain separation main body unit and a drain separation unit housing which externally covers the drain separation main body unit;
the hollow fiber membrane-type dehumidification unit has a hollow fiber membrane-type dehumidification unit housing which externally covers the hollow fiber membrane; and
the adsorption-type dehumidification unit has an adsorbent housing portion in which the adsorbent is housed and an adsorption-type dehumidification unit housing which externally covers the adsorbent housing portion,
the drain separation unit housing, the hollow fiber membrane-type dehumidification unit housing and the adsorption-type dehumidification unit housing being provided integrally or joined to each other so as to form a flow path of compressed air flowing through the drain separation unit, the hollow fiber membrane-type dehumidification unit and the adsorption-type dehumidification unit.
